# EUROPEAN PATENT SPECIFICATION

(11) **EP 0 507 492 B1**
(45) Date of publication and mention of the grant of the patent: **27.07.1994**
(21) Application number: 92302570.4
(22) Date of filing: 25.03.1992
(51) Int. Cl.: B60T 8/42, B60T 8/94

(54) **Improvement in hydraulic anti-lock braking systems for vehicles**
Blockiergeschütztes Bremssystem für Kraftfahrzeuge
Système de freinage anti-blocage pour véhicules

(30) Priority: 05.04.1991 GB 9107148
(43) Date of publication of application: 07.10.1992
(73) Proprietor: LUCAS INDUSTRIES PUBLIC LIMITED COMPANY, Solihull, West Midlands B91 3TX (GB)
(72) Inventor: Farr, Glyn Phillip Reginald, Leek Wootton, Warwickshire (GB)
(74) Representative: Spall, Christopher John

(56) References cited:
- EP-A- 0 344 544
- EP-A- 0 369 412

## Description

This invention relates to hydraulic anti-lock braking systems according to the preamble of claim 1.

Flow control valves for use in an hydraulic anti-lock braking system are disclosed in EP-A-0 369 412, EP-A-0 344 544 and EP-A-0 401 856. In these construction a spool working in a bore in a housing is provided with an axial passage including a primary orifice of fixed area, and a cross passage in the spool, suitably a drilling, interconnects the axial passage with an outlet port in the bore through an orifice of variable size defined between a metering edge at the outer end of the cross-drilling and a outlet port.

In an anti-lock braking system of the kind set forth it is essential to ensure that the brakes can still be applied in the event of a malfunction of the flow control valve. In the valves of EP-A-0 369 412, EP-A-0 344 544 and EP-A-0 401 856 a malfunction may occur should the spool stick in the bore, for example due to blockage at passages in the spool. This may be caused by the build up of foreign matter on flares or burrs where the cross-drilling traverses the axial passage. In production it is extremely difficult to ensure that such flares or burrs are removed due to the inaccessibility of the inner ends of the cross-drilling.

This problem is not addressed in EP -A- 0 369 412 and EP -A- 0 344 544.

To overcome this problem EP-A- 0 401 856 shows a by-pass passage which by-passes the isolation edge of the flow control valve is incorporated in the housing,and a secondary fixed orifice is located in the by-pass passage. The by-pass passage provides a permanent connection between the brake and the dump chamber. On brake release, however, should the spool stick in the bore in conditions in which only a low pressure dump and a small release of pressure are required to achieve wheel correction, then the fluid will be dumped to the dump chamber through the secondary orifice, and no pressure differential will develop across the spool. In consequence the master cylinder will not be isolated from the brake, and fluid from the master cylinder will be lost to the dump chamber. On re-application, fluid pumped to the brake from the dump chamber is metered at the metering edge, and passes first through the primary orifice, and then through the secondary orifice. If either of these orifices becomes blocked, and the spool sticks in its bore, the brake cannot be re-applied.

According to our invention in an hydraulic anti-lock braking system in which automatic brake release and brake re-application in an anti-lock mode is determined by operation of a flow control valve, in a brake release mode the valve being operative initially to isolate a master cylinder from the brake, and then to dump fluid from the brake to a dump chamber, and in a brake re-application mode fluid withdrawn from the chamber by a pump being re-applied to the brake, at a rate controlled by flow through the flow control valve, the flow control valve comprising a spool working in a bore in a housing, an axial passage in the spool including a primary orifice of fixed area, and a cross-passage in the spool interconnecting the axial passage and a port in the wall of the bore through an orifice of variable size defined between a metering edge at the outer end of the cross-drilling, characterised in that a secondary orifice of fixed area is provided between the axial passage and the bore (8) in parallel with the primary orifice.

The secondary orifice is radially arranged and may be provided in the spool itself, or in the wall of the bore in which the spool is adapted to work.

In an anti-lock ABS mode the primary orifice and the secondary orifice act in parallel to determine the flow rate. If one of the orifices becomes blocked, the other orifice will continue to function.

Providing the secondary orifice enables us to reduce the effective area of the primary orifice. This increases the pressure differential to which the spool is subjected for a given pressure, thereby increasing the force available to overcome the resistance of the spool to movement in the bore.

If the spool is prevented from moving in the bore, when the brake is isolated from both the master cylinder and a spring chamber at the inner end of the bore and which houses a return spring for the spool, the brake can still be applied through the secondary orifice upon closures of a solenoid-operated valve responsive to wheel speed signals.

When the master cylinder is operated for normal braking, fluid is freely transmitted to the brake without restriction and pedal feel is normal.

Two embodiments of our invention are illustrated in the accompanying drawings in which:-
Figure 1 is a layout of an hydraulic anti-lock braking system for a vehicle;
Figure 2 is a graph of pressure against time;
Figure 3 is a layout similar to Figure 2 with the system in an initial ABS mode with the brake isolated from the master cylinder;
Figure 4 is a graph of pressure against time;
Figure 5 is a layout similar to Figure 2 during the ABS mode with the brake connected to the dump chamber;
Figure 6 is a graph of pressure against time;
Figure 7 is a layout similar to Figure 2 with the master cylinder port closed;
Figure 8 is a graph of pressure against time;
Figure 9 is a layout similar to Figure 2 with the spool valve moving to the metering edge;
Figure 10 is a graph of pressure against time;
Figure 11 is a layout similar to Figure 2 with the brake being re-applied automatically during the ABS mode;
Figure 12 is a graph of pressure against time; and
Figure 13 is a layout of another anti-lock hydraulic braking system.

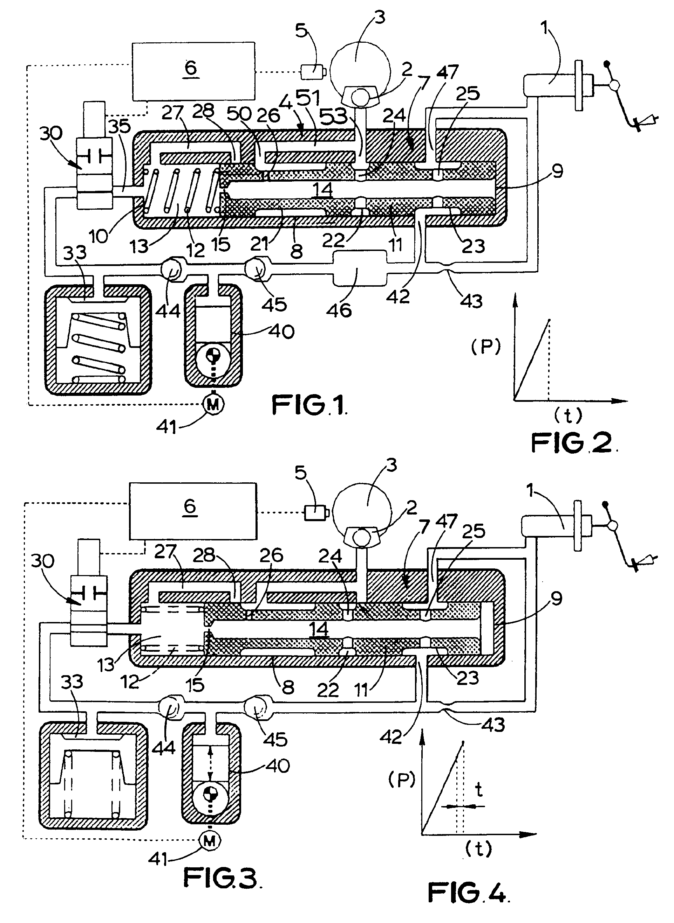

The anti-lock braking system illustrated in Figure 1 of the accompanying drawings comprises a pedal-operated hydraulic master cylinder 1 for applying a brake 2 on a wheel 3 of a vehicle through a modulator assembly 4. The behaviour of the wheel is sensed by a wheel speed sensor 5 which sends signals to an electronic control unit 6, and the signals are processed by the unit 6 which, in turn, emits an energising current to control operation of the modulator assembly 4 comprising a flow control valve.

The modulator assembly 4 comprises a housing 7 having a longitudinal bore 8 of constant diameter which extends between axially spaced faces 9, 10 at opposite ends of the housing 7.

A spool 11 works in the bore and is biassed against the face 9 by a spring 12 housed in a spring chamber 13 defined between the spool 11 and the face 10. The spool 11 has a central passage in the form of a drilling 14 with a fixed restrictor 15 of reduced diameter comprising a primary orifice at the end of the drilling adjacent to the spring chamber 13. The spool is also provided with three, external, axially spaced annular grooves 20, 21, 22 of which the two grooves 22, 23 furthest from the spring chamber 13 have radial passages 24, 25 communicating with the drilling 14, and the groove 21 communicates with the brake 2 through a radial port 50 and an axial passage 51.

A restrictor 26 comprising a secondary orifice is defined by a radial passage in the spool 11 which provides communication between the drilling 14 and the groove 21.

A passage 27 leading from the spring chamber 13 terminates in a port 28 which is normally closed by the spool 11.

A first single acting normally closed solenoid operated valve 30 normally isolates the spring chamber 13 from an expander chamber 33, comprising a spring-loaded piston working in a bore, through an outlet passage 35.

A pump 40 driven by an electric motor 41 is adapted to withdraw fluid from the expander chamber 33 and return it to the drilling 14 of the flow control valve 4 through a port 42 in the wall of the housing 7 which communicates with the radial passage 25 through the groove 23, and to the master cylinder 1 through a restrictor 43. The pump 40 withdraws fluid through a first one-way valve 44 and discharges it through a second one-way valve 45 to the port 42 through an attenuation chamber 46.

The master cylinder 1 is itself connected to the flow control valve 4 through a radial passage 47 in the wall of the housing 7. The passage 47 is displaced axially towards the wall 9 with respect to the port 42.

Figures 1, 3, 5, 7, 9 and 11 of the drawings illustrate functions of the system during different aspects of brake-applying and ABS release and re-application modes. Corresponding reference numerals have been applied to corresponding parts. The graphs of Figures 2, 4, 6, 8, 10 and 12 illustrate the relationship between the pressure (p) applied to the brake and time (t).

In normal braking, as illustrated in Figure 1, operation of the master cylinder 1 causes fluid under pressure to flow to the groove 23 in the flow control valve 4 and through the central passage 14 and the groove 22 to the brake 2 through an outlet passage 53 with which the passage 51 communicates. At the same time pressure builds up at both ends of the spool 11. During such normal braking the solenoid of the valve 30 and the motor 41 are de-energised.

The characteristics of normal braking are illustrated in Figure 2 from which it will be noted that the pressure applied to the brake 2 increases proportionally with time.

An ABS mode illustrated in Figures 3, 5, 7, 9, and 11 is attained when the electronic control module 6 recognises that a signal from the wheel speed sensor 5 is indicative of an incipient wheel skid. In such a situation the electronic control unit 6 energises the motor 41 to drive the pump 40, and energises the solenoid of the valve 30 to open the connection 35. Opening the first valve 30 therefore connects the spring chamber 13 to the expander chamber 33. In consequence, as shown in Figure 3, the spool 11 moves in the bore 8 to isolate the brake 2 from the master cylinder 1 by the spool 11 closing the inner end of the passage 53.

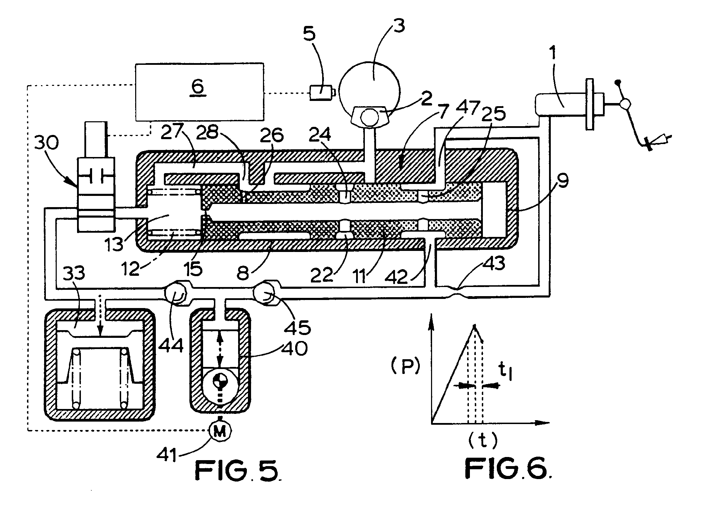

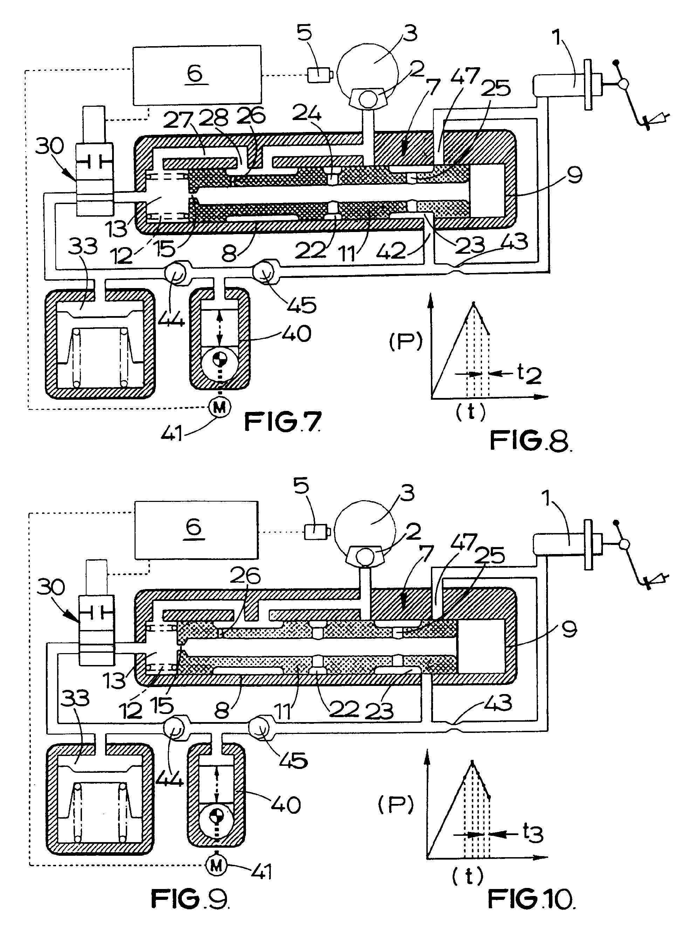

The pressure is still applied to the brake 2 through the secondary radial orifice 26 and continues to rise slightly for a time interval (t) as shown in Figure 4 until further movement of the spool 11 in the same direction, as shown in Figure 5, connects the brake 2 to the expander chamber 33 to relieve the brake pressure. At this stage the pump 40 returns fluid to the master cylinder 1 from the expander chamber 33. As shown in Figure 6 the pressure is relieved for a time interval (t₁).

The valve spool 11 moves still further in the same direction to isolate the main master cylinder port 7, as shown in Figure 7. At this stage the spool 11 is driven by fluid from the pump 40 and by the master cylinder 1, through the attenuation restrictor 43. During this movement the brake pressure continues to drop for a time interval (t₂) as shown in Figure 8.

The valve spool moves still further in the same direction until, as shown in Figure 9, the spool 11 reaches its metering edge with a face at the end of the groove 23 adjacent to the face 9 co-operating with the port 42. The difference in flow between the pump 40 and the flow valve 4 is attenuated by the restrictor 43. This gives a very good pedal feel, since only surplus pump flow needs to be attenuated. The brake pressure drops still further for a time interval (t₃).

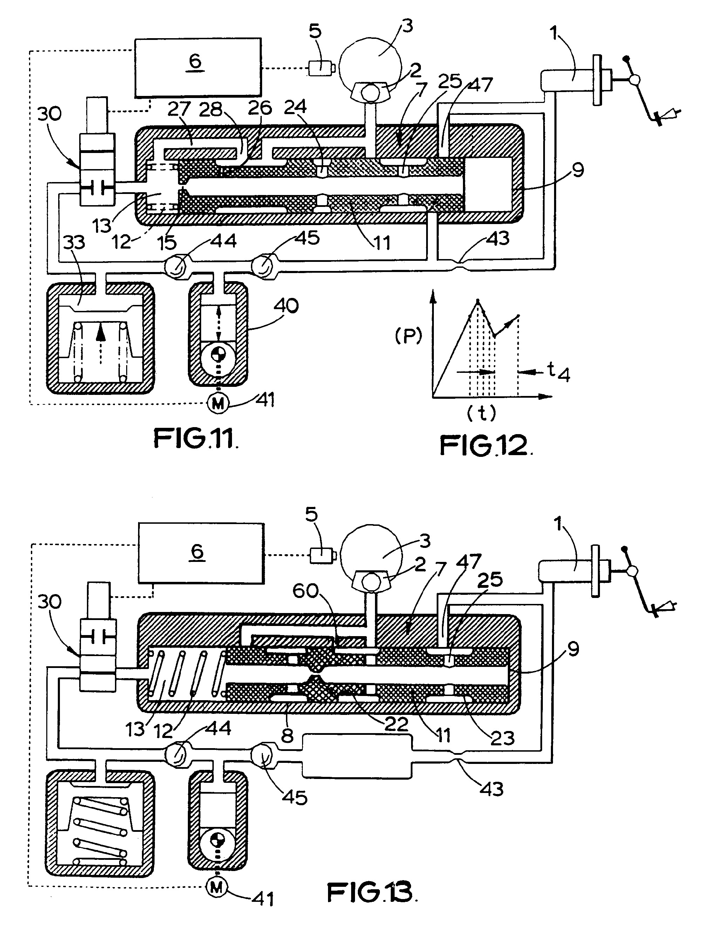

On wheel recovery, the solenoid-operated valve 30 closes, and as shown in Figure 11 the brake 2 is re-applied at a rate determined by the flow control valve 4. During this period (t₄) as shown in Figure 12, the fluid is returned from the expander chamber 33 to the flow valve 4 for transmission to the brake with the surplus flow again attenuated by the restrictor 43.

To maintain a given flow rate, the areas of the two orifices 15 and 26 must equal the area of a single, central, orifice for providing the said given flow rate. For example, with an original orifice diameter of 0.5mm, the new central orifice 15 and this secondary radial orifice 26 can both be 0.353mm in diameter, or any combination of areas which equate to the original. For example, the orifice 15 may be 0.3mm and the radial orifice 0.4mm.

Should the spool 11 stick in the bore 8 when the brake is to be applied normally, all the flow will pass through the primary central orifice 15 thereby subjecting the spool 11 to a substantial pressure differential, in a direction to cause the spool 11 to move in the bore and free itself.

Should the spool 11 stick in the position shown in Figure 3, the fluid from the brake 2 can be dumped, at a restricted rate, through the two orifices 26 and 15 in series. If re-applying in this position, re-application takes place through both orifices 15 and 26, both from the pump 40 and the master cylinder 1. If one is blocked the brake can be applied through the other orifice.

Should the spool 11 stick to the position shown in Figure 5, 7 or 9, fluid can be dumped through the groove 21. To re-apply in this position fluid can flow through both orifices 15 and 26 so that re-application can still take place should one of the orifices 15 or 26 become blocked.

In the system shown in the layout of Figure 13, the radial orifice 26 in the spool 11 is replaced by a radial orifice 60 in the wall of the bore 8, between the groove 22, which is extended in length, and the passage 51.

The construction and operation of the layout of Figure 13 is otherwise the same as that of Figure 1, and corresponding reference numerals have been applied to corresponding parts.

## Claims

1. An hydraulic anti-lock braking system in which automatic brake release and brake re-application in an anti-lock mode is determined by operation of a flow control valve, in a brake release mode the valve being operative initially to isolate a master cylinder (1) from the brake (2), and then to dump fluid from the brake to a dump chamber (33), and in a brake re-application mode fluid withdrawn from the chamber (33) by a pump (40) being re-applied to the brake (2), at a rate controlled by flow through the flow control valve, the flow control valve comprising a spool (11) working in a bore (8) in a housing (7), an axial passage (14) in the spool including a primary orifice (15) of fixed area, and a cross-passage (25) in the spool interconnecting the axial passage (14) and a port (42) in the wall of the bore (8) through an orifice of variable size defined between a metering edge at the outer end of the cross-drilling (25), characterised in that a secondary orifice (26) of fixed area is provided between the axial passage (14) and the bore (8) in parallel with the primary orifice (15).

2. An hydraulic anti-lock braking system according to claim 1, characterised in that the secondary orifice (26) is radially arranged and provided in the spool (11) itself.

3. An hydraulic anti-lock braking system according to claim 1, characterised in that the secondary orifice (26) is radially arranged and provided in the wall of the bore (8) in which the spool (11) is adapted to work.

4. An hydraulic anti-lock braking system according to any previous claim, characterised in that a spring chamber (13) is defined between the spool (11) and one end (10) of the bore (8).

5. An hydraulic anti-lock system according to claim 4 characterised in that a first normally closed solenoid operated valve (30) normally isolates the spring chamber (13) from the dump chamber (33).

6. An hydraulic anti-lock braking system according to any previous claim, characterised in that the spool (11) is provided with three, external, axially spaced annular grooves (21,22,23).

7. An hydraulic anti-lock braking system according to claim 6, characterised in that the two grooves (22,23) furthest from the spring chamber (13) have radial passages (24,25) communicating with the axial passage (14), and the third groove (21) communicates with the brake (2) through a radial point (50) and an axial passage (51).

8. An hydraulic anti-lock system according to any previous claim, characterised in that the pump (40) withdraws fluid through a first one-way valve (44) and discharges it through a second one-way valve (45) to the port (42) through an attenuation chamber (46).

9. An hydraulic anti-lock system according to any previous claim, characterised in that the master cylinder (1) is connected to the flow control valve through a radial passage (47) in the bore (8) of the housing (7).

10. An hydraulic anti-lock system according to claim 9, characterised in that the radial passage 847) is displaced axially with respect to the port (42).

## Patentansprüche

1. Blockiergeschütztes Bremssystem, bei dem automatische Bremsenlösung und erneuter Einsatz des Bremsvorgangs in einem Blockierschutzmodus durch die Betätigung eines Stromsteuerventils bestimmt wird, wobei das Ventil in einem Bremsenlösungsmodus aktiv ist, um zunächst einen Hauptzylinder (1) von der Bremse (2) zu trennen und dann Flüssigkeit von der Bremse in eine Ausgleichskammer (33) zu füllen, und wobei in einem Modus für erneuten Bremseinsatz von der Kammer (33) über eine Pumpe (40) abgezogene Flüssigkeit der Bremse (2) erneut in einem durch das Stromsteuerventil strömenden Fluß gesteuerten Verhältnis zugeführt wird, wobei das Stromsteuerventil einen in der Bohrung (8) eines Gehäuses (7) arbeitenden Steuerschieber (11), einen Axialdurchgang (14) in dem Steuerschieber mit einer ersten Öffnung (15) unveränderlicher Größe und einen Querdurchgang (25) in dem Steuerschieber zur Verbindung des Axialdurchgangs (14) mit einer Öffnung (42) in der Wand der Bohrung (8) über eine Öffnung variabler Größe aufweist. welche zwischen einer Dosierkante am äußeren Ende des Querdurchgangs (25) definiert ist.
dadurch gekennzeichnet, daß
eine zweite Öffnung (26) unveränderlicher Größe zwischen dem Axialdurchgang (14) und der Bohrung (8) parallel zu der ersten Öffnung (15) vorgesehen ist.

2. Blockiergeschütztes Bremssystem nach Anspruch 1,
dadurch gekennzeichnet, daß die zweite Öffnung (26) radial angeordnet und in dem Steuerschieber (11) selbst vorgesehen ist.

3. Blockiergeschütztes Bremssystem nach Anspruch 1,
dadurch gekennzeichnet, daß die zweite Öffnung (26) radial angeordnet und in der Wand der Bohrung (8) vorgesehen ist, in welcher der Steuerschieber (11) arbeitet.

4. Blockiergeschütztes Bremssystem nach einem der vorhergehenden Ansprüche,
dadurch gekennzeichnet, daß eine Federkammer (13) zwischen dem Steuerschieber (11) und einem Ende (10) der Bohrung (8) definiert ist.

5. Blockiergeschütztes Bremssystem nach Anspruch 4,
dadurch gekennzeichnet, daß ein erstes durch einen Magneten betätigtes Ventil (30), welches im Normalzustand geschlossen ist, die Federkammer (13) normalerweise von der Ausgleichskammer (33) trennt.

6. Blockiergeschütztes Bremssystem nach einem der vorhergehenden Ansprüche,
dadurch gekennzeichnet, daß der Steuerschieber (11) drei externe, axial im Abstand angeordnete ringförmige Vertiefungen (21, 22, 23) aufweist.

7. Blockiergeschütztes Bremssystem nach Anspruch 6,
dadurch gekennzeichnet, daß die beiden Vertiefungen (22, 23), welche von der Federkammer (13) am weitesten entfernt sind, radiale Durchgänge (24, 25) aufweisen, die mit dem Axialdurchgang (14) in Verbindung stehen, und daß die dritte Vertiefung (21) mit der Bremse (2) über eine radiale Öffnung (50) und einen Axialdurchgang (51) in Verbindung steht.

8. Blockiergeschütztes Bremssystem nach einem der vorhergehenden Ansprüche,
dadurch gekennzeichnet, daß die Pumpe (40) über ein erstes Einwegventil (44) Flüssigkeit abzieht und diese über ein zweites Einwegventil (45) durch eine Druckminderungskammer (46) zu der Öffnung (42) abführt.

9. Blockiergeschütztes Bremssystem nach einem der vorhergehenden Ansprüche,
dadurch gekennzeichnet, daß der Hauptzylinder (1) durch einen radialen Durchgang (47) in der Bohrung (8) des Gehäuses (7) mit dem Stromsteuerventil verbunden ist.

10. Blockiergeschütztes Bremssystem nach Anspruch 9,
dadurch gekennzeichnet, daß der radiale Durchgang (47) im Hinblick auf die Öffnung (42) axial verschoben ist.

## Revendications

1. Système de freinage hydraulique antiblocage, dans lequel un desserrage et un resserrage automatiques du frein dans un mode antiblocage sont déterminés par actionnement d'une soupape de commande d'écoulement, dans un mode de desserrage de frein la soupape étant actionnée initialement pour isoler un maître-cylindre (1) du frein (2) puis pour décharger du fluide du frein vers une chambre de décharge (33) alors que, dans un mode de resserrage de frein, du fluide aspiré à partir de la chambre (33) par une pompe (40) est renvoyé au frein (2), à un débit commandé par l'écoulement passant dans la soupape de commande d'écoulement, cette soupape de commande d'écoulement comprenant un tiroir (11) opérant dans un alésage (8) formé dans un corps (7), un passage axial (14) prévu dans le tiroir comprenant un orifice primaire (15) de section fixée, tandis qu'il est prévu dans le tiroir un passage transversal (25) assurant la liaison du passage axial (14) avec un trou (42) prévu dans la paroi de l'alésage (8) par l'intermédiaire d'un orifice de dimension variable défini par un bord de dosage situé à l'extrémité extérieure du perçage transversal (25), système caractérisé en ce qu'un orifice secondaire (26) de section fixée est formé entre le passage axial (14) et l'alésage (8) en parallèle à l'orifice primaire (15).

2. Système de freinage hydraulique antiblocage selon la revendication 1, caractérisé en ce que l'orifice secondaire (26) est disposé radialement et est formé dans le tiroir (11) proprement dit.

3. Système de freinage hydraulique antiblocage selon la revendication 1, caractérisé en ce que l'orifice secondaire (26) est disposé radialement et est formé dans la paroi de l'alésage (8) où le tiroir (11) est adapté pour se déplacer.

4. Système de freinage hydraulique antiblocage selon une quelconque des revendications précédentes, caractérisé en ce qu'une chambre à ressort (13) est définie entre le tiroir (11) et une extrémité (10) de l'alésage (8).

5. Système de freinage hydraulique antiblocage selon la revendication 4, caractérisé en ce qu'une première soupape (30), actionnée par solenoïde et normalement fermée, isole normalement la chambre à ressort (13) de la chambre de décharge (33).

6. Système de freinage hydraulique antiblocage selon une quelconque des revendications précédentes, caractérisé en ce que le tiroir (11) est pourvu de trois rainures annulaires extérieures (21, 22, 23) espacées axialement.

7. Système de freinage hydraulique antiblocage selon la revendication 6, caractérisé en ce que les deux rainures (22, 23) qui sont les plus éloignées de la chambre à ressort (13) comportent des passages radiaux (24, 25) communiquant avec le passage axial (14) et la troisième rainure (21) communique avec le frein (2) par l'intermédiaire d'un passage radial (50) et d'un passage axial (51).

8. Système de freinage hydraulique antiblocage selon une quelconque des revendications précédentes, caractérisé en ce que la pompe (40) aspire du fluide par l'intermédiaire d'une première soupape unidirectionnelle (44) et assure sa décharge par l'intermédiaire d'une seconde soupape undirectionnelle (45) jusqu'à la lumière (42) par l'intermédiaire d'une chambre d'atténuation (46).

9. Système de freinage hydraulique antiblocage selon une quelconque des revendications précédentes, caractérisé en ce que le maître-cylindre (1) est relié à la soupape de commande d'écoulement par l'intermédiaire d'un passage radial (47) prévu dans l'alésage (8) du corps (7).

10. Système de freinage hydraulique antiblocage selon la revendication 9, caractérisé en ce que le passage radial (47) est décalé axialement par rapport à la lumière (42).
